# FASCICULE DE BREVET EUROPEEN

(11) **EP 3 129 597 B1**
(45) Date de publication et mention de la délivrance du brevet: **24.10.2018**
(21) Numéro de dépôt: 15717582.9
(22) Date de dépôt: 02.04.2015
(51) Int. Cl.: F01D 5/30, F01D 5/32, F04D 29/32

(54) **VERROU DE ROTOR DE TURBOMACHINE**
KEIL EINES ROTORS EINER STRÖMUNGSMASCHINE
LOCK OF A ROTOR OF A TURBOMACHINE

(30) Priorité: 07.04.2014 US 201461976254 P
(43) Date de publication de la demande: 15.02.2017
(73) Titulaire: SAFRAN AIRCRAFT ENGINES, 75015 Paris (FR)
(72) Inventeur: MARIN, Sébastien, 77550 Moissy-Cramayel Cedex (FR)
(74) Mandataire: Verrue, Jacques
(86) Numéro de dépôt international: PCT/FR2015/050862
(87) Numéro de publication internationale: WO 2015/155446

(56) Documents cités:
- EP-A2- 1 748 154
- WO-A1-2012/150425
- US-A1- 2013 156 591

## Description

### DOMAINE TECHNIQUE

Le présent exposé concerne un verrou de rotor de turbomachine. Il peut s'agir, en particulier, d'un verrou de soufflante de turboréacteur.

Un tel verrou sert à retenir axialement une aube par rapport au disque de rotor sur lequel l'aube est montée.

### ARRIERE PLAN

Dans le présent exposé, la direction axiale correspond à la direction de l'axe de rotation du rotor de la turbomachine, et une direction radiale est une direction perpendiculaire à cet axe. De même, un plan axial est un plan contenant l'axe de rotation du rotor, et un plan radial est un plan perpendiculaire à cet axe. Une direction circonférentielle ou tangentielle, en un point éloigné de l'axe, correspond à une direction perpendiculaire aux directions axiale et radiale.

Par ailleurs, sauf précision contraire, les adjectifs "intérieur" et "extérieur" sont utilisés en référence à une direction radiale de sorte que la partie intérieure (i.e. radialement intérieure) d'un élément est plus proche de l'axe de rotation que la partie extérieure (i.e. radialement extérieure) du même élément.

Enfin, l'amont et l'aval sont définis par rapport au sens d'écoulement normal du fluide (de l'amont vers l'aval) traversant la turbomachine.

Classiquement, dans un turboréacteur d'avion double flux, le rotor de soufflante comprend des aubes disposées autour d'une partie centrale du rotor appelée "disque". Ces aubes ont chacune un pied engagé dans une rainure, appelée "alvéole", ménagée à la périphérie du disque. Le profil (en section transversale) d'une alvéole est configuré pour retenir radialement un pied d'aube, c'est-à-dire pour empêcher le pied d'aube de sortir de l'alvéole, suivant la direction radiale, sous l'effet de la force centrifuge. Au montage, on engage chaque pied d'aube dans son alvéole en le faisant glisser par une extrémité, e.g. l'extrémité amont de l'alvéole.

Il est connu de "fermer" chaque alvéole à cette extrémité par un verrou. Par exemple, ce verrou est engagé dans des encoches latérales ménagées de part et d'autre de l'alvéole (i.e. dans les parois latérales de l'alvéole), au niveau de l'extrémité de l'alvéole.

Le verrou joue un rôle important puisqu'il permet d'arrêter l'aube en translation suivant la direction axiale, étant précisé qu'en fonctionnement l'aube exerce sur le verrou une force souvent comprise entre 5000 et 9000 N. Le verrou assure, de plus, une fonction d'amortisseur de choc (e.g. dans les cas d'ingestion d'oiseau ou de perte d'aube) grâce à un tampon amortisseur intercalé entre le corps du verrou et le pied de l'aube.

Des exemples de verrous sont décrits dans les documents de brevet FR 2889264 et FR 2974864. WO2012/150425 montre un verrou avec un tampon amortisseur.

On connait par ailleurs un verrou comprenant un corps métallique en alliage de titane sur lequel est fixé un tampon amortisseur en aluminium, ce tampon ayant une structure en nid d'abeille. Une plaque en acier est par ailleurs fixée à la surface du tampon amortisseur pour répartir la charge sur toutes les alvéoles de la structure en nid d'abeille. Bien que techniquement satisfaisant, ce verrou métallique présente l'inconvénient d'être relativement complexe à fabriquer. En outre, ce verrou métallique est relativement lourd, ce qui pose problème dans le domaine de l'aéronautique où diminuer la masse des pièces est une préoccupation constante.

Il existe donc un besoin pour un nouveau type de verrou.

### PRESENTATION GENERALE

Le présent exposé concerne un verrou de rotor de turbomachine, en particulier de soufflante de turboréacteur, adapté pour retenir axialement une aube par rapport à un disque du rotor.

Selon un mode de réalisation, le verrou comprend un corps composite comprenant une structure fibreuse tissée, noyée dans une matrice. Le verrou peut également comprendre un tampon amortisseur en élastomère, fixé sur le corps composite. De tels matériaux permettent de diminuer significativement la masse du verrou, comparé aux verrous connus, tout en permettant d'obtenir la résistance mécanique nécessaire à l'utilisation envisagée.

En particulier, concernant le gain de masse, seulement pour le corps du verrou et à titre d'exemple, il est possible de passer de 55 g par pièce (pour un corps métallique) à 20 g par pièce (pour un corps composite).

Concernant la résistance mécanique du verrou, celle-ci peut être améliorée en orientant les fils de la structure fibreuse suivant les directions radiale et tangentielle du rotor. Ainsi, dans certains modes de réalisation, la structure fibreuse tissée comprend des fils de chaîne et des fils de trame orientés de telle sorte que, lorsque le verrou est en position sur le rotor, les fils de chaîne sont orientés suivant la direction tangentielle du rotor et les fils de trame sont orientés suivant la direction radiale du rotor, ou inversement.

La structure fibreuse peut être réalisée par tissage tridimensionnel. Comparativement à d'autres méthodes et, notamment à l'utilisation de couches de tissu préimprégnées de résine, ou "prépregs", le tissage tridimensionnel permet d'obtenir un ensemble plus résistant, moins sujet au risque de délaminage.

Dans certains modes de réalisation, une partie de la structure fibreuse, située à l'opposé du tampon amortisseur, forme une patte faisant saillie dans la direction opposée au tampon amortisseur. En particulier, lorsque la structure fibreuse est réalisée par tissage tridimensionnel, ladite portion peut être tissée de manière déliée, de manière à pouvoir être pliée par rapport au reste de la structure.

Outre les caractéristiques qui viennent d'être mentionnées plus haut, le dispositif proposé peut présenter une ou plusieurs des caractéristiques parmi les suivantes, considérées isolément ou selon des combinaisons techniquement possibles:
- La matrice du corps composite est organique. Par exemple, la matrice organique est une résine polymérique. En particulier, la matrice organique peut être formée à partir d'une résine thermodurcissable à base de polymère époxyde, de polybismaléimide ou de cyanate ester, ou à partir d'une résine thermoplastique à base de polyaryléthercétone (PAEK - incluant PEEK, PEKK, PEK, PEKEKK, PEKKEK, etc.), de polyethylenimine (PEI), de poly(sulfure de phénylène) (PPS), de polyimide (PI) ou résulter d'un mélange des polymères précités.
- La structure fibreuse, faisant office de structure de renfort, peut être constituée de fibres, chaque fibre étant un filament de matière ou un ensemble (e.g. un toron) de filaments. En particulier, il peut s'agir de fibres de carbone, d'aramide, de verre, etc.
- Le tampon amortisseur est fixé par collage sur le corps composite.

Les caractéristiques et avantages précités, ainsi que d'autres, apparaîtront à la lecture de la description détaillée qui suit, d'un exemple de réalisation du verrou proposé. Cette description détaillée fait référence aux dessins annexés.

### BREVE DESCRIPTION DES DESSINS

Les dessins annexés sont schématiques et ne sont pas à l'échelle, ils visent avant tout à illustrer les principes de l'invention.

Sur ces dessins, d'une figure (FIG) à l'autre, des éléments (ou parties d'élément) identiques sont repérés par les mêmes signes de référence.
La FIG 1 est une vue partielle, en perspective et éclatée, d'un exemple de rotor de soufflante.
La FIG 2 est une vue de face du verrou de la FIG 1.
La FIG 3 est une vue de dessus du verrou de la FIG 2, selon la flèche III.
La FIG 4 est une vue de côté du verrou de la FIG 2, selon la flèche IV.

### DESCRIPTION DETAILLEE D'EXEMPLE(S)

Un exemple de réalisation est décrit en détail ci-après, en référence aux dessins annexés. Cet exemple illustre les caractéristiques et les avantages de l'invention. Il est toutefois rappelé que l'invention ne se limite pas à cet exemple.

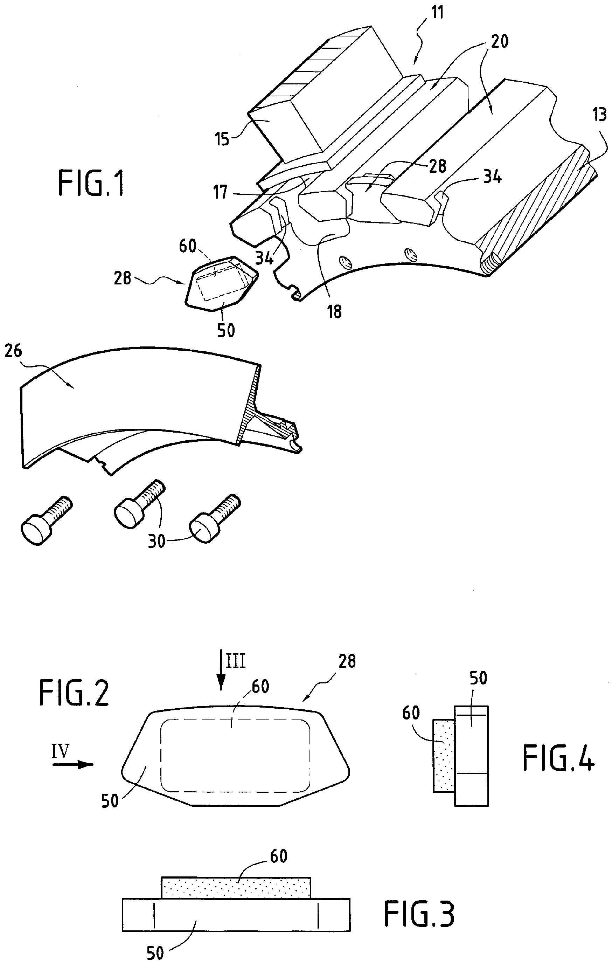

Le rotor de soufflante 11 de la FIG 1, se compose principalement d'un disque 13 auquel sont rattachées des aubes de soufflante 15. Chaque aube 15 comporte un pied d'aube 17 engagé dans une rainure ou alvéole 18, correspondante, du disque 13.

Dans l'exemple, le disque 13 comprend à sa périphérie des nervures radiales 20, s'étendant sur une certaine longueur, parallèlement à l'axe du rotor. Ces nervures 20 définissent entre elles les alvéoles 18. Le profil des nervures 20 est tel que deux bossages latéraux 22 bordent l'ouverture supérieure de chaque alvéole 18. La forme des nervures 20 et, donc, des alvéoles 18 est déterminée pour retenir les pieds d'aubes 17. Une cale longitudinale (non représentée) peut être intercalée entre le fond de l'alvéole 18 et le pied d'aube 17 pour stabiliser la position de l'aube, radialement.

Les extrémités amont des alvéoles 18 peuvent être refermées, d'une part, collectivement par un flasque annulaire 26 et, d'autre part, individuellement par des verrous 28 respectifs. Le flasque annulaire 26 peut être assemblé par des vis 30 au disque 13.

Dans l'exemple, chaque verrou 28 est engagé dans des encoches 34 pratiquées de part et d'autre de l'alvéole 18 que le verrou 28 referme, au voisinage de l'extrémité amont de cette alvéole. Plus précisément, chaque encoche 34 peut être pratiquée dans les nervure 20 entourant l'alvéole 18, à proximité de l'extrémité amont ces nervures. Le verrou 28 s'oppose ainsi au déplacement de l'aube 15 suivant la direction axiale, vers l'amont.

En référence aux figures 2 à 4, le verrou 28 comprend un corps composite 50. Ce corps 50 comprend une structure fibreuse tissée, noyée dans une matrice. Par exemple, la structure fibreuse est en fibres de carbone à module intermédiaire (e.g. des fibres "IM7"), et peut être réalisée par tissage tridimensionnel. Cette structure fibreuse est noyée dans une résine organique, par exemple une résine Epoxy (e.g. une résine "PR520"), formant la matrice du corps composite 50.

Un tampon amortisseur 60 en élastomère, par exemple en butyle ou éthylène propylène diène monomère (EPDM), est fixé sur la face aval du corps composite. Par exemple, ce tampon 60 peut être collé à l'aide d'une colle méthacrylate (e.g. une colle "Araldite 2048"), après un traitement de surface.

Le mode de réalisation décrit dans le présent exposé est donné à titre illustratif et non limitatif, une personne du métier pouvant facilement, au vu de cet exposé, modifier ce mode de réalisation, ou en envisager d'autres, tout en restant dans la portée de l'invention.

Par ailleurs, l'expression "comprenant un" doit être comprise comme étant synonyme de "comprenant au moins un", sauf si le contraire est spécifié.

Enfin, les différentes caractéristiques du mode de réalisation décrit dans le présent exposé peuvent être considérées isolément ou être combinées entre elles. Lorsqu'elles sont combinées, ces caractéristiques peuvent l'être comme décrit ci-dessus ou différemment, l'invention ne se limitant pas aux combinaisons spécifiques précédemment décrites. En particulier, sauf précision contraire ou incompatibilité technique, une caractéristique décrite en relation avec un mode ou exemple de réalisation peut être appliquée de manière analogue à un autre mode ou exemple de réalisation.

## Revendications

1. Verrou de rotor de turbomachine, en particulier de soufflante de turboréacteur, adapté pour retenir axialement une aube (15) par rapport à un disque (13) du rotor, le verrou (28) comprenant :
- un corps composite (50) comprenant une structure fibreuse tissée, noyée dans une matrice, et
- un tampon amortisseur (60) en élastomère, fixé sur le corps composite.

2. Verrou selon la revendication 1, dans lequel la structure fibreuse tissée comprend des fils de chaîne et des fils de trame orientés de telle sorte que, lorsque le verrou (28) est en position sur le rotor, les fils de chaîne sont orientés suivant la direction tangentielle du rotor et les fils de trame sont orientés suivant la direction radiale du rotor, ou inversement.

3. Verrou selon la revendication 1 ou 2, dans lequel la structure fibreuse est réalisée par tissage tridimensionnel.

4. Verrou selon l'une quelconque des revendications 1 à 3, dans lequel une portion de la structure fibreuse, située à l'opposé du tampon amortisseur (60), forme une patte en saillie orientée dans la direction opposée au tampon amortisseur.

5. Verrou selon l'une quelconque des revendications 1 à 4, dans lequel la matrice du corps composite (50) est organique.

6. Verrou selon l'une quelconque des revendications 1 à 5, dans lequel le tampon amortisseur (60) est fixé par collage sur le corps composite (50).

7. Rotor de turbomachine, en particulier de soufflante de turboréacteur, comprenant un disque (13) de rotor, des aubes (15) attachée au disque, et un verrou (28) selon l'une quelconque des revendications 1 à 6, retenant axialement une aube (15) par rapport au disque (13).

8. Rotor selon la revendication 7, comprenant des aubes (15) ayant chacune un pied (17) par lequel l'aube est fixée dans une alvéole (18) du disque (13), et dans lequel le verrou (28) est fixé à une extrémité axiale de l'alvéole (18).

9. Rotor selon la revendication 8, dans lequel le tampon amortisseur (60) est situé entre le pied d'aube (17) et le corps composite (50).

## Patentansprüche

1. Verriegelung für einen Rotor einer Strömungsmaschine, insbesondere eines Gebläses einer Strahlturbine, geeignet zur axialen Sicherung einer Schaufel (15) relativ zu einer Scheibe (13) des Rotors, wobei die Verriegelung (28) umfasst:
- einen Verbundkörper (50), umfassend eine gewebte Faserstruktur, die in eine Matrix eingebettet ist, und
- ein Dämpfungselement (60) aus Elastomer, das auf dem Verbundkörper fixiert ist.

2. Verriegelung nach Anspruch 1, wobei die gewebte Faserstruktur Kettfäden und Schussfäden umfasst, die so orientiert sind, dass die Kettfäden der tangentialen Richtung des Rotors folgend orientiert sind und die Schussfäden der radialen Richtung des Rotors folgend orientiert sind, oder umgekehrt, wenn die Verriegelung (28) sich in ihrer Position an dem Rotor befindet.

3. Verriegelung nach Anspruch 1 oder 2, wobei die Faserstruktur durch dreidimensionales Weben ausgebildet ist.

4. Verriegelung nach einem der Ansprüche 1 bis 3, wobei ein Teil der Faserstruktur, der dem Dämpfungselement (60) entgegengesetzt liegt, eine vorspringende Lasche bildet, die in der dem Dämpfungselement entgegengesetzten Richtung orientiert ist.

5. Verriegelung nach einem der Ansprüche 1 bis 4, wobei die Matrix des Verbundkörpers (50) organisch ist.

6. Verriegelung nach einem der Ansprüche 1 bis 5, wobei das Dämpfungselement (60) durch Verkleben auf dem Verbundkörper (50) fixiert ist.

7. Rotor einer Strömungsmaschine, insbesondere eines Gebläses einer Strahlturbine, umfassend eine Rotorscheibe (13), an der Scheibe befestigte Schaufeln (15) und eine Verriegelung (28) nach einem der Ansprüche 1 bis 6, die eine Schaufel (15) relativ zu der Scheibe (13) axial sichert.

8. Rotor nach Anspruch 7, umfassend Schaufeln (15), die jeweils einen Fuß (17) aufweisen, durch welchen die Schaufel in einer Ausnehmung (18) der Scheibe (13) fixiert ist, und wobei die Verriegelung (28) an einem axialen Ende der Ausnehmung (18) fixiert ist.

9. Rotor nach Anspruch 8, wobei das Dämpfungselement (60) zwischen dem Schaufelfuß (17) und dem Verbundkörper (50) liegt.

## Claims

1. A turbine engine rotor lock, in particular for a turbojet fan, adapted to retain a blade (15) axially relative to a disk (13) of the rotor, the lock (28) comprising:
· a composite body (50) comprising a woven fiber structure embedded in a matrix; and
· a damper pad (60) made of elastomer and fastened to the composite body.

2. A lock according to claim 1, wherein the woven fiber structure comprises warp yarns and weft yarns oriented in such a manner that when the lock (28) is in position on the rotor, the warp yarns are oriented in the tangential direction of the rotor and the weft yarns are oriented in the radial direction of the rotor, or vice versa.

3. A lock according to claim 1 or claim 2, wherein the fiber structure is made by three-dimensional weaving.

4. A lock according to any one of claims 1 to 3, wherein a portion of the fiber structure, situated opposite the damper pad (60), forms a projecting tab oriented in the direction away from the damper pad.

5. A lock according to any one of claims 1 to 4, wherein the matrix of the composite body (50) is organic.

6. A lock according to any one of claims 1 to 5, wherein the damper pad (60) is fastened to the composite body (50) by adhesive bonding.

7. A turbine engine rotor, in particular for a turbojet fan, comprising a rotor disk (13), blades (15) attached to the disk, and a lock (28) according to any one of claims 1 to 6 and retaining a blade (15) axially relative to the disk (13).

8. A rotor according to claim 7, comprising blades (15), each having a root (17) by which the blade is fastened in a slot (18) of the disk (13), and wherein the lock (28) is fastened to an axial end of the slot (18).

9. A rotor according to claim 8, wherein the damper pad (60) is situated between the blade root (17) and the composite body (50).
